## Europäisches Patentamt
## European Patent Office
## Office européen des brevets

(19)

(11) Veröffentlichungsnummer: **0 006 403**
**B1**

(12) **EUROPÄISCHE PATENTSCHRIFT**

(45) Veröffentlichungstag der Patentschrift: **23.09.81**

(21) Anmeldenummer: **78100244.9**

(22) Anmeldetag: **27.06.78**

(51) Int. Cl.³: **G 07 F 17/12,**
**G 06 F 15/26, G 07 C 11/00**

(54) **Schliessfachanlage mit einer zentralen Bedienungseinheit.**

(43) Veröffentlichungstag der Anmeldung:
**09.01.80 Patentblatt 80/1**

(45) Bekanntmachung des Hinweises auf die Patenterteilung:
**23.09.81 Patentblatt 81/38**

(84) Benannte Vertragsstaaten:
**CH DE FR GB NL SE**

(56) Entgegenhaltungen:
**DE - A - 2 018 773**
**DE - A - 2 042 406**
**DE - A - 2 207 998**
**DE - A - 2 260 975**
**DE - A - 2 359 317**
**DE - B - 2 452 591**
**FR - A - 1 583 259**
**US - A - 3 379 295**
**US - A - 3 670 177**
**US - A - 3 742 453**
**US - A - 3 820 072**
**US - A - 3 821 704**

(73) Patentinhaber: **Tele-Alarm, Nachrichtentechnische**
**Geräte GmbH Herstellungs- und**
**Vertriebsgesellschaft & Co.KG**
**Sandbergstrasse 11**
**D-8501 Schwaig-Behringersdorf (DE)**

(72) Erfinder: **Hofmann, Otto**
**Bernstädterstrasse 9**
**D-8500 Nürnberg (DE)**
Erfinder: **Nagler, Georg**
**Bahnhofstrasse 1**
**D-8481 Oberwildenau (DE)**

(74) Vertreter: **Rau, Manfred, Dr. Dipl.-Ing.**
**Postfach 91 04 80 Lange Zeile 30**
**D-8500 Nürnberg 91 (DE)**

## Schließflachanlage mit einer zentralen Bedienungseinheit

Die Erfindung betrifft eine Schließfachanlage der im Oberbegriff des Patentanspruches 1 genannten Art.

Eine solche Schließfachanlage ist aus der DE—OS 22 60 975 als Kleiderschrank- oder Umkleidekabinenanlage für öffentliche Bäder bekannt. Sie arbeitet nach dem Prinzip, gegen Vorlage eines Geldbetrages entsprechend der maximal in Betracht kommenden Nutzungsdauer — bei Abrechnung und gegebenenfalls Teil-Rückerstattung am Ende der tatsächlichen Nutzungsdauer — nach Maßgabe der Betätigung einer Wahl-Taste aus einem bestimmten Bereich eines Schlüsselmagazines einen Schlüssel auszugeben und außerdem eine Zugangssperre, beispielsweise ein Drehkreuz, vorübergehend freizugeben, Im Zuge der Ausgabe eines Schlüssels wird eine diesen identifizierende Kodierung, beispielsweise die Schlüsselbart-Kodierung, erfaßt und eine diesem Schlüssel zugeordnete Belegzeit-Ermittlungsschaltung aktiviert, aus der die Nutzungsdauer bei Nutzungende abgelesen wird, wenn der Schlüssel in die Anlage zurückgegeben und seine Kodierung von einem Aufnahme-Detektor erfaßt wird. Für die Belegzeit-Ermittlung ist eine Speicherschaltung vorgesehen, die aus den einzelnen Schlüsseln fest zugeordneten Zählern besteht. Während des Zeitraumes der Schlüssel-Ausgabe empfängt der entsprechende Zähler aus einer fortlaufend betriebenen Zeittaktschaltung Zählimpulse, die über die Dauer der Schlüsselausgabe aufsummiert werden. Nachteilig an einer solchen Badekabinen-Anlage in Hinblick auf die praktischen Anforderungen, die an eine herkömmliche Gepäckschließfachanlage gestellt werden, ist insbesondere der erhebliche apparative und schaltungstechnische Aufwand für die Kodierung der einzelnen zur Verfügung stehenden und auf Abruf auszugebenden Schlüssel, für die Erfassung dieser Kodierung einmal bei der Schlüsselausgabe und unabhängig davon in einem weiteren Detektor bei der Schlüsselrückgabe und für die Belegzeit- oder Nutzungsdauer-Ermittlung. Diese Anlage weist darüber hinaus den ganz erheblichen Nachteil zahlreicher Mißrauchsmöglichkeiten mit duplizierten oder einbehaltenen Schlüsseln auf. Die Kontrolle auf vollständiges Vorhandensein aller Schlüssel ist aufwendig und der Ersatz verlorengegangener Schlüssel kostspielig. Die Anzahl unterschiedlicher optoelektronisch zu erfassender Schlüsselkodierungen ist darüberhinaus vergleichsweise beschränkt, zumal dann, wenn der apparative Aufwand zum Erfassen der Schlüssel-Kodierung einmal bei der Ausgabe und dann bei der Rückgabe in Grenzen gehalten werden soll. Andererseits ist der Speicher-Aufwand infolge je eines einem Schlüssel zuzuordnenden Zählers schaltungstechnisch sehr groß.

Aus der US—PS 3 379 295 ist eine gattungsähnliche Schließfachanlage bekannt, die dafür ausgelegt ist, vorübergehend persönliches Gut, beispielsweise zu waschende Kleidung, zu reparierende Schuhe oder bereits erworbene aber noch entgegenzunehmende Ware, gegen Ausgabe einer Quittungskarte aufzunehmen, wobei die Fachtür Zugang zu einem einer Vielzahl hinter der Fachtür vorbei bewegbaren Aufnehmern eines Förderbandsystems ermöglicht. Beim Einlegen von Ware in einen solchen Aufnehmer wird eine diesem zugeordnete Quittungskarte ausgegeben, auf der in Form einer gedruckten Schaltung zur Identifizierung dieses Aufnehmers eine Kodierung angeordnet ist. Bei Wieder-Eingabe dieser Quittungskarte wird der zugeordnete Aufnehmer aus dem Speicher- und Förderbandsystem wieder hinter die Zugangstür verfahren, um von außen zur Waren-Entnahme zugänglich zu sein. Ein solches Förderband-Speichersystem mag sich für den Dienstleistungssektor wie zur Abgabe von zu reinigender Kleidung eignen, weil die Anlage in der Reinigung selbst betrieben wird, also während mehrerer Stunden des Tages auf ihre Funktionstüchtigkeit hin beaufsichtigt werden kann. Für Schließfachanlagen der Art, wie sie als Handgepäck-Schließfächer z.B. auf Bahnhöfen installiert sind, eignet sich eine solche Anlage wegen der hohen Störanfälligkeit und der erforderlichen räumlichen Ausdehnung in Hinblick auf die notwendige Kapazität auch für große Gepäckstücke, nicht.

Für ein gattungsfremdes Hotelreservierungs- und Sicherheits-System ist es aus der US—PS 3 742 453 bekannt, den Kunden einer Hotelkette mit einer speziellen Kreditkarte auszustatten, auf der in kodierter Form Personendaten dieses Kunden enthalten sind und zusätzlich hotelspezifische Daten abspeicherbar und auslesbar sind. Die hotelspezifischen Daten bestehen in der kodierten Angabe eines dem Kunden für die Buchungszeit von Hotelcomputer automatisch oder vom Empfangschef manuell zugewiesenen Zimmers, wobei die Zimmernummer dem Kunden visuell angegeben wird und zu dieser Zimmernummer im Zentralcomputer eine dem Kunden nicht erkennbare Codenummer erzeugt wird, die in kodierter Form auf der Karte abgespeichert wird. Jede Zimmertür ist mit einem eigenen Lesegerät ausgestattet, von dem aus die Zimmernummer sowie außerdem die diesem Zimmer momentan zugeordneten und auf der eingeführten Karte enthaltene Codenummer an den Zentralcomputer übermittelt wird. Im Falle der Übereinstimmung dieser Codenummer mit einer bei Ausgabe der Karte bzw. beim Buchungsvorgang zugeteilten Codenummer wird die Zimmertür zur Benutzung des Zimmers freigegeben. Zur Erzeugung der Codenummer kann ein Zufallsgenerator benutzt werden. Nach Beendigung der Mietdauer, also bei Auszug, wird die Codeinformation auf der Karte gelöscht. Einem bestimmten Zimmer wird periodisch oder bei Neubelegung eine andere Codenummer zugeordnet. Besonders kodierte Karten sind dafür vorgesehen, autorisiertes Personal zu jeder Zeit zu allen Räumen Zugang zu verschaffen. Nachteilig an diesem System ist insbesondere der große Aufwand, an jeder einzelnen Tür ein Lesegerät vorsehen zu müssen. Von anwendungsorientiertem Nachteil ist darüber hinaus, daß nach Beendigung der Nutzungsdauer die Codeinformation auf der Karte gelöscht wird, so daß im Reklamationsfalle oder für Kontrollzwecke keine Zuordnung zum Speicherinhalt des Zentralcomputers mehr möglich ist.

Ausgehend von dieser Erkenntnis der benutzungs- und betriebstechnischen Nachteile herkömmlicher, allgemein eingeführter Schließfachanlagen liegt der Erfindung die Aufgabe zugrunde, eine Schließfachanlage der erläuterten Art zu schaffen, die den Benutzern einen höheren Komfort liefert und für die Aufsteller wesentlich geringeren Wartungsaufwand bedingt.

Diese Aufgabe wird bei einer Schließfachanlage der genannten Art erfindungsgemäß dadurch gelöst, daß sie mit den Merkmalen des kennzeichnenden Teils des Patentanspruches 1 ausgestattet ist.

Bei dieser Lösung entfällt für den Benutzer die umständliche Suche nach einem freien Fach geeigneter Größe; vielmehr genügt es, an der zentralen Bedienungseinheit die erforderliche Fachgröße für die abzulegenden Gegenstände anzugeben, woraufhin die Gebührenschuld für die Grund-Belegungszeit angezeigt und nach Entrichten der erforderlichen Gebühr die Schließfach-Nummer, also der Ort dieses Schließfaches angegeben wird, nachdem als Quittung über die Belegung dieses Schließfaches eine Schlüsselkarte mit Magnetspur aus der Bedienungseinheit entnommen wurde. Bei Wieder-Einführung dieser Schlüsselkarte in die Bedienungseinheit wird (bei Überziehen der Grund-Belegungszeit) die nachzuentrichtende Gebühr angezeigt und nach Gebührenentrichtung dem Benutzer seine Fachnummer angezeigt, die dann zur Wieder-Öffnung zwecks Entnahme der eingelegten Gegenstände freigegeben wird. Eine Prüfdaten-Information auf der Magnetspur der Schlüsselkarte, die vor Belegen des Schließfaches, also im Zusammenhang mit der Ausgabe der Schlüsselkarte, gebildet und auf der Magnetspur abgespeichert wurde, stellt sicher, daß mittels dieser Schlüsselkarte weder ein anderes Schließfach, noch abermals das momentan angesprochene Schließfach geöffnet werden kann; denn bei Neubelegung dieses Schließfaches werden die diesem Schließfach zugeordneten Prüfdaten, die auf der nächstausgegebenen Schlüsselkarte abgespeichert werden, geändert, so daß abermalige Verwendung einer alten Schlüsselkarte (mit nicht mehr geltenden Prüfdaten) unterbunden ist. Für das Wartungspersonal entfällt also die bisher erforderliche periodische Umstellung des Schlosses an den einzelnen Schließfächern, am unbefugte Öffnung durch Schlüssel-Duplikate oder einbehaltene Original-Schlüssel zu unterbinden, wobei als Unsicherheitsfaktor bisher immer noch die Tatsache bestand, daß die Schloß-Umstellung nur zwischen einer begrenzten Anzahl unterschiedlicher Schlüsselbart-Geometrien möglich ist. Für das Wartungspersonal von solchen Schließfachanlagen entfällt darüber hinaus bei der erfindungsgemäßen Schließfachanlage der Aufwand zur Funktionskontrolle der Münzprüfer und des Belegzeitwerkes sowie zum individuellen Abkassieren der Münzen aus den einzelnen Schließfach-Türen, weil nun nur noch ein einziges Zeitwerk und ein einziger Münzprüfer für eine praktisch beliebig große Anzahl individueller Schließfächer in der zentralen Bedienungseinheit vorhanden und zu warten bzw. abzukassieren ist.

Die zusätzliche Maßnahme nach Anspruch 2 ist besonders dann von Vorteil, wenn bei ausgedehnten Schließfachanlagen eine gewisse Zeit für die Zurücklegung des Weges von der zentralen Bedienungseinheit bis zum zugeordneten Schließfach vorgewählter Größe vergehen kann. Wenn die Öffnungsfreigabe sofort bei Anzeige der Schließfach-Nummer, nach Entrichtung einer etwa eingeforderten Nachgebühr, erfolgen würde, bestünde nämlich die Gefahr, daß eine unbefugte Person, die sich zufällig am Orte dieses Schließfaches befindet und aufgrund der Wirkung des elektromechanischen Verschlußsystems hört, daß die Öffnung freigegeben wurde, das Schließfach entleert, ehe die befugte Person sich von der zentralen Bedienungseinheit zu jenem nummernmäßig angezeigten Schließfach begeben kann.

Die weiterbildende Maßnahme nach Anspruch 3 erbringt den Vorteil, daß durch Blink-Anzeige einer etwaigen Gebührenschuld die Aufmerksamkeit des Benutzers besonders sicher auf diesen Sachverhalt gelenkt wird und seine Aufmerksamkeit durch Anzeige der Nummer des belegten und nunmehr zur Wieder-Öffnung freizugebenden Faches erst dann abgelenkt wird, wenn die Gebührenschuld beglichen ist.

Da bei der Schließfachanlage nach der Erfindung störanfällige elektromechanische Einrichtungen wie ein Münzprüfer und eine Belegzeit-Ermittlungseinrichtung lediglich einmal in der zentralen Bedienungseinheit vorgesehen sind, sind die bei den bisher aufgestellten Schließfachanlagen ins Kalkül zu ziehenden Betriebsstörungen auf ein Minimum reduziert, so daß es vertretbar ist, gar kein Wartungspersonal mehr unmittelbar bei der Schließfachanlage einzusetzen. Damit entfällt allerdings auch für die Benutzer die Möglichkeit, beispielsweise bei Schwierigkeiten im Umgang mit solchen Schließfachanlagen Rat beim nahen Wartungspersonal zu holen. Durch die Weiterbildung nach Anspruch 4 ist jedoch sichergestellt, daß die Benutzer sich bei Bedienungsproblemen bei anderweitig und an anderem Ort eingesetztem sachkundigem Personal Rat holen können.

Gerade bei ausgedehnten Schließfachanlagen auf Bahnhöfen oder an anderen Orten mit viel Publikumsverkehr ist nicht auszuschließen, daß das eine oder andere Schließfach deshalb unbenutzbar wird, weil beispielsweise der Vorbenutzer verdorbene Lebensmittel darin zurückgelassen hat. In einem solchen Falle wäre es unbillig, einem Interessenten die Beleggebühr für ein Schließfach abzunehmen, dessen Belegung ihm beispielsweise aufgrund einer starken Verschmutzung unzumutbar ist. Nach der weiterbildenden Maßnahme gemäß Anspruch 5 kann der Interessent dann den schon entrichteten Gebührenbetrag über Betätigung einer Geldrückgabe-Taste zurückerstattet bekommen. Damit bei erneuter Anforderung eines Faches dieser Größe diesem Interessenten oder einem nächsten Interessenten nicht immer wieder jenes zwar nicht belegte aber unbenutzbare Fach zugewiesen wird, wird dieses offenbar nicht mehr anzubietende Schließfach bei der zusätzlich vorgesehenen Maßnahme gemäß Anspruch 5 gegen weitere, abermalige Zuteilung gesperrt, wenn es mehrfach nacheinander zugeteilt aber nicht benutzt worden war. Die Nichtbenutzung trotz Zuteilung läßt sich ohne großen technischen Aufwand beispielsweise dadurch ermitteln, daß ein Türverschluß-Quittungssignal innerhalb einer gewissen Zeitspanne nach Zuteilung des Schließfaches ausbleibt, oder ohne Belegung (mit Türverschluß) des gerade zugeteilten Schließfaches die Geldrückgabe-Taste betätigt wird.

Weil die störanfälligen elektromechanischen Teile der Schließfachanlage nun nur noch einmal, und zwar in der zentralen Bedienungseinheit vorkommen, Störfälle also auf ein Minimum reduziert sind, bedarf es nicht der Einweisung qualifizierten Personals in die Funktion dieser Schließfachanlage; vielmehr kann das noch verbleibende Minimum an Wartungsarbeiten, insbesondere in Form von Reinigung der Schließfächer und Entleeren des Münzbehälters, nebenbei von Hilfspersonal durchgeführt werden, das an sich für andere Aufgaben eingesetzt und geschult ist. Die zusätzliche Maßnahme nach Anspruch 6 stellt sicher, daß auch dieses im Umgang mit der Schließfachanlage nicht besonders geübte Hilfspersonal die notwendigen Handgriffe für Kontroll- und Entstöroperationen richtig ausführt, indem die an der zentralen Bedienungseinheit für Betätigung durch das Publikum vorgesehenen Handhaben in ihrer Funktions-Zuordnung durch Betätigung eines nicht öffentlich zugänglichen Personalschalters geändert werden. Eine Aufsetzschablone ist dabei dafür vorgesehen, durch Austausch der Informationen an den Betätigungsorganen nach Betätigung des Personalschalters nunmehr zielsicher

die für solche Wartungs- und Kontrollarbeiten erforderlichen Handgriffe durchführen zu können.

Dabei kann eine funktionelle Kopplung der Art vorgesehen sein, daß diese Betätigung des dem Publikum nicht zugänglichen, beispielsweise innerhalb des Gehäuses der zentralen Bedienungseinheit angeordneten, Personalschalters erst dann möglich bzw. wirksam wird, wenn die Aufsetzschablone über die funktionell geänderte Zuordnung der einzelnen Handhaben angebracht ist.

Die weitergehende Maßnahme nach Anspruch 7 ist insbesondere im Hinblick darauf von Bedeutung, daß bei Reklamationsfällen der Benutzer zwar seine Schlüsselkarte mit der beschriebenen Magnetspur verfügbar hat, daß aber bei inzwischen erfolgter anderweitiger Benutzung die Einführung dieser Schlüsselkarte aufgrund unterdessen geänderten Prüfdaten-Satzes nicht mehr zur Ansteuerung eines unterdessen neu belegten Schließfaches und demzufolge auch nicht mehr zur Ansteuerung irgendeiner Anzeige führt. Um dennoch feststellen zu können, welchem Schließfach diese Reklamations-Schlüsselkarte zugeordnet gewesen war, und gegebenenfalls, wann die Belegung mittels dieser Schlüsselkarte erfolgte (wenn eine solche Zeitangabe ebenfalls auf der Magnetspur abgespeichert ist), ermöglicht es die zusätzliche Maßnahme nach Anspruch 7 dem Wartungspersonal, das dem Reklamationsfall nachgehen soll, den Inhalt der Magnetspur abzulesen und anzeigen zu lassen, obwohl den auf dieser Schlüsselkarte enthaltenen Prüfdaten kein entsprechender Prüfdatensatz im Speicher mehr zugeordnet ist.

Die weitergehende Maßnahme nach Anspruch 8 stellt sicher, daß auch solche Interessenten, die mit dieser Schließfachanlage noch nicht vertraut sind, an der zentralen Bedienungseinheit vor dem Belegen bzw. vor dem Wieder-Öffnen eines Schließfaches die erforderlichen Handgriffe in der korrekten Reihenfolge ausführen, ohne dafür umständlich Bedienungsanleitungen im Zusammenhang, unabhängig von einem aktuell auszuführenden Handgriff, studiert haben zu müssen.

Weitere Merkmale und Vorteile der Erfindung ergeben sich aus nachstehender Beschreibung eines in der Zeichnung unter Beschränkung auf das Wesentliche dargestellten, bevorzugten Ausführungsbeispieles zur erfindungsgemäßen Schließfachanlage. Es zeigt

Fig. 1 die Ansicht einer zentralen Bedienungseinheit für eine Vielzahl von einzelnen Schließfächern,

Fig. 2 ein Beispiel für die Stellung einer Schließfach-Einziehtür bei nicht-belegtem Schließfach,

Fig. 3 im Blockschaltbild den grundsätzlichen Aufbau eines Rechen- und Steuerwerkes innerhalb der zentralen Bedienungseinheit nach Fig. 1,

Fig. 4 in Abänderung und Erweiterung des Blockschaltbildes nach Fig. 3 die wesentlichen Teile eines Rechen- und Steuerwerkes für eine abgewandelte zentrale Bedienungseinheit mit Bildschirm-Ansteuerung für eine Benutzer-Kommunikation und

Fig. 5 in Ansicht eine Schließfachanlage mit zwei unterschiedlichen Fachgrößen und zentraler Bedienungseinheit mit Kommunikations-Bildschirm nach Fig. 4.

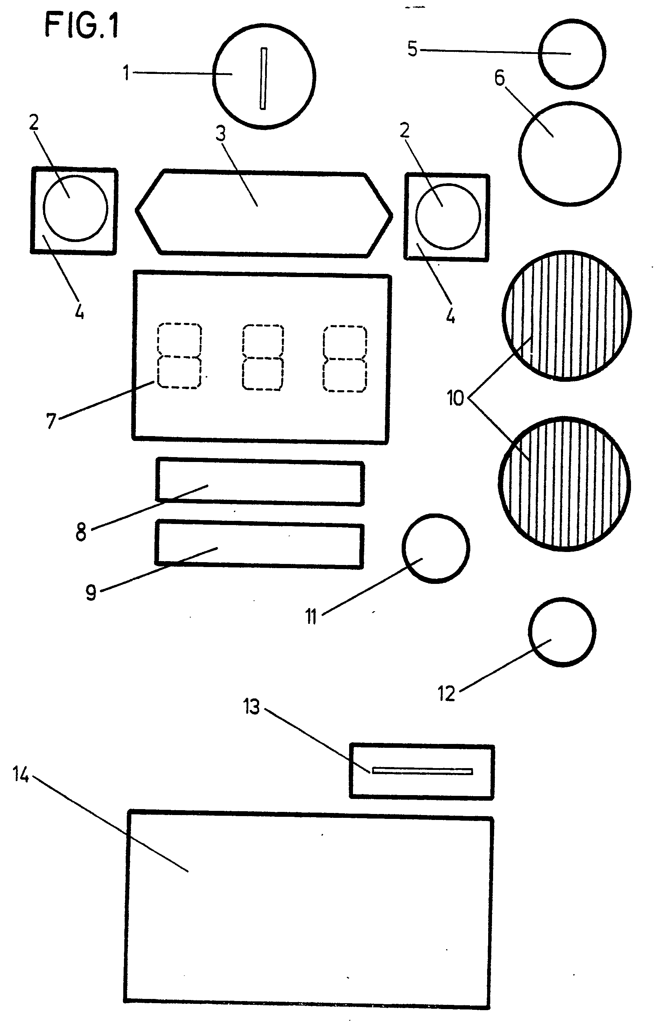

Aus der Ansichts-Darstellung einer zentralen Bedienungseinheit gemäß Fig. 1 ist ein Münzeinwurf 1 oberhalb eines Wahl-Hinweisschildes 3 ersichtlich. Zwei Wahl-Tasten 4 sind zwei verfügbaren Schließfach-Größen zugeordnet. In die Wahl-Tasten 4 sind Belegt-Anzeigen 2 integriert, die signalisieren, wenn ein Schließfach der über eine der Wahl-Tasten 4 angeforderten Größe nicht mehr verfügbar sein sollte.

Neben dem Münzeinwurf 1 ist eine Geldrückgabe-Taste 5 vorgesehen.

Eine Anzeige 6 leuchtet auf, wenn diejenige Höchstbelegungszeit überschritten wurde, für die eine Verlängerungsgebühr nachentrichtet werden kann.

Je nach dem momentanen Bedienungsstadium gibt eine Leuchtanzeige 7 an, welcher Gebührenbetrag für das Belegen bzw. für das Wieder-Öffnen eines Schließfaches noch zu entrichten bzw. nachzuentrichten ist, und danach die Nummer des zu belegenden bzw. des für die Wieder-Öffnung freigegebenen Schließfaches. Was die momentane Zahlenangabe auf der Leuchtanzeige 7 zum Inhalt hat, ist der Ansteuerung eines der beiden Leuchtschilder 8 "Noch zu zahlen" bzw. 9 "Sie haben Fach Nr. ...." zu entnehmen.

Eine Öffnungstaste 11 ist betätigbar, um eine Schließfachverschluß - Öffnungsfreigabeeinrichtung für Entnahme der eingelegten Gegenstände zu betätigen, nachdem eine etwaige Gebührenschuld durch Nachentrichtung beglichen und die Nummer des zu öffnenden Faches angezeigt ist.

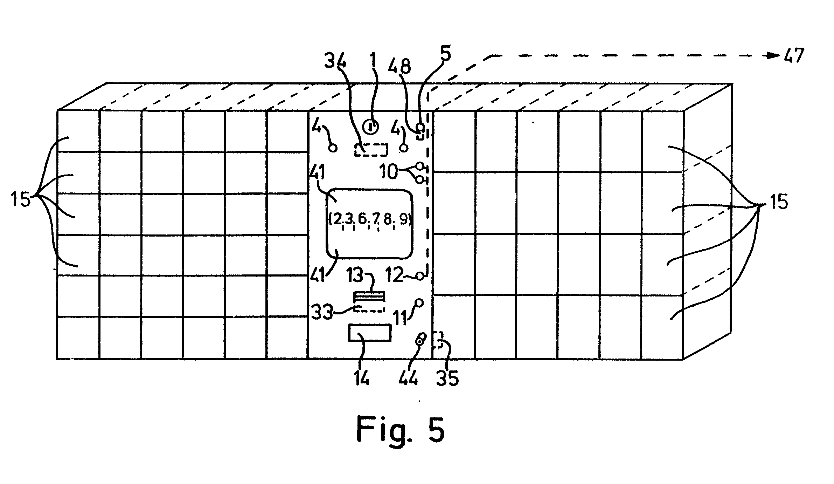

Eine Sprechverbindung 10 dient der Kommunikation mit einer abgesetzten Empfangsstelle 47 auf Betätigung einer Sprechtaste 12, vgl. auch Fig. 5.

Ein Einleseschlitz 13 ist einem Magnetspur-Lesegerät zugeordnet und dient der Aufnahme einer Magnetspur-Schlüsselkarte zum Auslesen der in der Magnetspur abgespeicherten Information und Rückgabe der Schlüsselkarte an den Benutzer.

An einer Ausgabemulde 14 ist Wechsel- oder Restgeld bzw. nach Betätigung der Geldrückgabe-Taste 5 zurückgegebenes Geld entnehmbar, und gegebenenfalls auch die dem zu belegenden Schließfach zugeordnete Magnetspur-Schlüsselkarte.

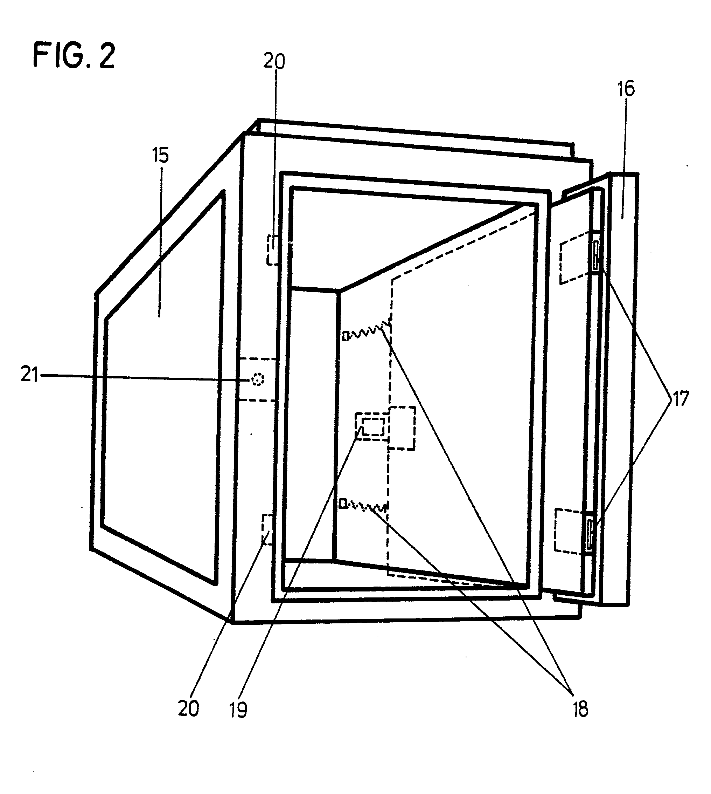

Aus Fig. 2 ist ein Beispiel eines Schließfaches 15 einer Schließfachanlage ersichtlich, das im nicht-belegten Zustand eine geöffnete Einziehtür 16 aufweist. Eine vordere Tür-Verriegelung 17 wird erst wirksam, wenn das Schließfach nach Zuteilung über die zentrale Bedienungseinheit belegt, die Einziehtür 16 also vom Benutzer geschlossen wird. Bis dahin ist die Einziehtür 16 mittels Einziehfedern 18 geöffnet gehalten, die zugleich dafür ausgelegt sein können, die Öffnungsbewegung der Tür 16 ohne manuellen Eingriff des Benutzers hervorzurufen, wenn die Öffnungstaste 11 (vgl. Fig. 1) betätigt wurde und eine gewisse Verzögerungszeit verstrichen ist.

Um Mißbrauch eines nicht-belegten Schließfaches auszuschließen und eine bewußte Durchführung einer Verschlußbewegung der Tür 16 bei Belegung eines Schließfaches 15 sicherzustellen, kann die Einziehtür 16 im nicht-belegten Zustand des Schließfaches 15 eine rückwärtige mechanische Verriegelung mit elektrisch ansteuerbarer Entriegelung 19 aufweisen, die ein Schließen der Tür 16 im Zuge des Belegens des Schließfaches 15 erst ermöglicht, wenn das Leuchtschild 9 in Verbindung mit der Leuchtanzeige 7 an der zentralen Bedienungseinheit (Vgl. Fig. 1) anzeigt, daß, nach Entrichtung der erforderlichen Gebühr, das Schließfach 15 der gewählten Größe zum Belegen zugeteilt ist.

Die vordere Verriegelung 17 zum Verschließen des belegten Schließfaches 15 wirkt mit vorderen Öffnungsmagneten 20 zusammen, die auf Betätigung der Öffnungs-Taste 11 (vgl. Fig. 1) die Tür 16, zur Öffnung des Schließfaches 15 und Entnahme der hinterlegten Gegenstände, aufgrund elektrischer Ansteuerung aus der zentralen Bedienungseinheit freigeben.

Am Schließfach 15 ist ferner ein Quittungsschalter 21 zur Abgabe eines Quittungssignales bei geschlossener Tür 16 vorgesehen.

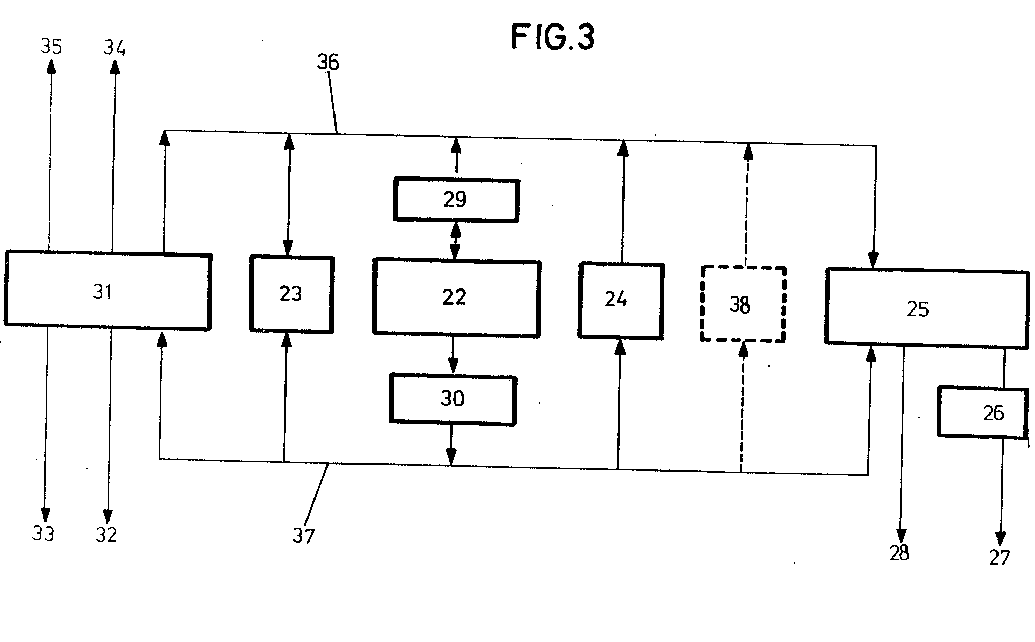

Der grundsätzliche Aufbau eines Rechen- und Steuerwerkes innerhalb der zentralen Bedienungseinheit (Fig. 1) ist aus Fig. 3 ersichtlich. Im Blockschaltbild besteht die Steuerungselektronik im wesentlichen aus einem Mikroprozessor 22 in Zusammenwirken mit einem 1 K Byte Schreib-Lese-Speicher (RAM) 23 und einem 2 K Byte programmierbaren Nur-Lese-Speicher (PROM) 24.

An ein in der Mikroprozessor-Technik übliches Outputinterface 25 sind Treiber 26 für leistungsstarke Verbraucher wie Lampen, Motoren oder Geldrückgabe-Einrichtungen in der zentralen Bedienungseinheit angeschlossen. Insbesondere führen die Treiber 26 auch auf Türmagnet-Relais 27 zum Ansteuern der Öffnungsmagnete 20 bzw. ggf. der hinteren Entriegelungen 19 (vgl. Fig. 2).

Dem Outputinterface 25 sind ferner ein Magnetkartencontroller zum Einschreiben bzw. Auslesen von binärkodierten Informationen auf der Magnetspur der Schlüsselkarte und eine Ziffernanzeige 28 für die Leuchtanzeige 7 (vgl. Fig. 1) nachgeschaltet.

Die Ansteuerung des Outputinterface 25 erfolgt in in der Mikroprozessortechnik üblicher Weise über einen Datenbus 36 sowie einen Adressbus 37, die über Treiber 29 bzw. 30 an den Mikroprozessor 22 angeschlossen sind.

Für die Informationseingabe ist ein Inputinterface 31 vorgesehen, an das Rückmeldungen 32 angeschlossen sind, die beispielsweise durch den Türverschluß-Quittungsschalter 21 (vgl. Fig. 2) realisiert sind, oder aber durch Kontrolleinrichtungen im Zusammenhang mit einer Münzprüfung, einer Zeiterfassung und einer Kontrollschaltung auf funktionell zutreffend betätigte Bedienungsorgane der zentralen Bedienungseinheit. Dazu gehören insbesondere ein dem Münzeinwurf 1 (vgl. Fig. 1) nachgeschalteter Münzprüfer 34 sowie etwaige weitere Eingabe- oder Bedienungstaster. Auch der Magnetspur-Leser 33 als derjenige Teil des Magnetkartencontrollers, der die Übermittlung von auf der Magnetspur eingeschriebenen Informationen an die zentrale Bedienungseinheit ermöglicht, ist an das Inputinterface 31 angeschlossen.

In Fig. 3 ist ferner berücksichtigt, daß es zweckmäßig sein kann, den Datenbus 36 und den Adressbus 37 gleich dafür auszulegen, Erweiterungsgeräte 38 über zusätzliche ROMs, RAMs, PROMs, Inputs oder Outputs anzuschließen.

Insbesondere dann, wenn von einfachen Ausführungen für die zentrale Bedienungseinheit mit Leuchtanzeige 7 und Leuchtschildern 8, 9 auf eine Interkommunikation mit dem Benutzer über eine Bildschirm-Darstellung übergegangen werden soll (vgl. unten), ist es zweckmäßig, schon die Grundausstattung des Rechen- und Steuerwerkes nach Fig. 3 für solche zusätzlichen Ansprüche auszulegen.

Je nach dem Aufstellungsort der Schließfachanlage kann es zweckmäßig sein, entgegen der Darstellung in Fig. 2 bei nicht-belegten Schließfächern 15 die Türen 16 nicht nach hinten eingezogen mechanisch zu verriegeln und erst bei Benutzer-Zuteilung eine elektromechanische Entriegelung 19 anzusteuern, sondern die Tür 16 auch bei nicht-belegten Schließfächern 15 geschlossen zu halten, um Mißbrauch wie Deponieren von Abfällen zu unterbinden. Da die Belegung eines Schließfaches 15 mit der Neuvergabe einer auf die Magnetspur der Schlüsselkarte einzuschreibenden Prüfdaten-Kombination einhergeht, ist aus dem Speicherinhalt des Rechen- und Steuerwerkes stets ohne weiteres ermittelbar, welches der Schließfächer 15 aufgrund Zuteilung nach Gebührenentrichtung belegt ist, und welches der ebenfalls verschlossenen Schließfächer zur Zuteilung frei ist. In diesem Falle erfolgte eine Ansteuerung einer Fachtür-Öffnungsfreigabeeinrichtung auch zur Öffnung der Tür 16 zwecks Belegung des Schließfaches 15.

Ob, bei verschiedenen Schließfachgrößen, ein großes oder ein kleines Schließfach 15 durch Tür-Freigabe zugeteilt und nummernmäßig auf der Leuchtanzeige 7 angezeigt wird, hängt davon ab, welche der Wahl-Tasten 4 über die gewünschte Fachgröße betätigt wurde. Die

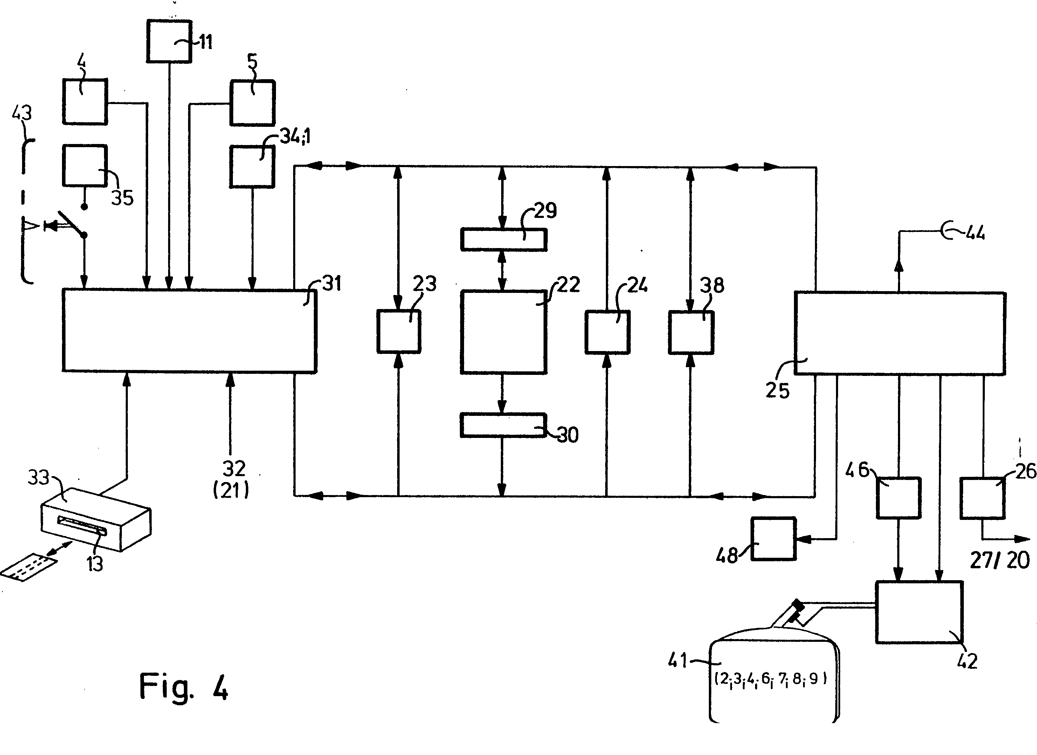

Ansteuerung des Leuchtschildes 8 ergibt den Hinweis, daß in der Leuchtanzeige 7 jetzt der Betrag angezeigt ist, der — bzw. der noch — zu entrichten ist, um ein Schließfach 15 für die Grundmietdauer belegen zu können. Die Zahlenangabe der Leuchtanzeige 7 gibt also bei Ansteuerung des Zahl-Leuchtschildes 8 die Gebührenschuld an. Zweckmäßigerweise erfolgt die Ansteuerung des Gebührenschuld-Leuchtschildes 8, das beispielsweise die Beschriftung "Noch zu zahlen" trägt, über einen Blinkgeber 46 (vgl. Fig. 4) intermittierend. Wenn nach einer gewissen vorgegebenen Zeitspanne, die beispielsweise ca. 20 sec. beträgt, diese angezeigte Gebührenschuld nicht beglichen wird, dann wird der etwa schon entrichtete Teilbetrag, der über einen Münzprüfer 34 in eine Zwischenkasse gelangte, in die Ausgabemulde 14 zurückgeworfen. Es kann dann ein neuer Schließfach-Anwahlvorgang erfolgen.

Erst dann, wenn der mittels der Leuchtanzeige 7 angezeigte Gebührenschuld-Betrag voll entrichtet wurde, wird vom Gebührenschuld-Leuchtschild 8 auf das Nummern-Leuchtschild 9 umgeschaltet. In der Leuchtanzeige 7 erscheint jetzt eine Zahl, die die Fach-Nummer zum Inhalt hat. Das Leuchtschild 9 trägt beispielsweise eine Aufschrift "Sie haben Fach Nr. . . . .", und auch das Leuchtschild 9 erfährt zweckmäßigerweise eine intermittierende Ansteuerung über einen Blinkgeber.

Sollte über die Format-Wahltaste 4 ein Schließfach 15 der Größe gewünscht worden sein, die nicht mehr verfügbar ist, weil alle Schließfächer 15 dieser Fachgröße belegt sind, dann leuchtet die Belegt-Anzeige 2 auf. Dennoch in den Münzeinwurf 1 eingegebenes Geld sowie etwa schon in die Zwischenkasse gelangtes Geld wird in die Ausgabemulde 14 zurückgeworfen.

Wenn dem Interessenten ein Schließfach 15 der gewünschten Größe zugewiesen werden kann und er den eingeforderten Gebührenbetrag für die Grundmietzeit entrichtet hat, wird eine mit einer Magnetspur ausgestattete Schlüsselkarte ausgegeben, beispielsweise in die Ausgabemulde 14 ausgeworfen. Dazu wird beispielsweise ein Streifenstück von einer Vorratsrolle abgespult, nämlich bis auf Abschnittlänge entsprechend der Schlüsselkartenlänge vorgeschoben. Nach erfolgtem Vorschub wird ein Signal zum Antrieb eines Trennmessers ausgelöst, um diesen Abschnitt von der Vorratsrolle abzuschneiden und als die Schlüsselkarte weiterzuführen. Die Rückkehr des Trennmessers in die Ruhelage nach dem Abschneiden der Schlüsselkarte von dem aufgespulten Vorratsstreifen bewirkt die Abgabe eines Signales für weiteren Vorschub der Schlüsselkarte über den Schreibkopf eines Magnetkartencontrollers, so daß die Magnetspur auf der Schlüsselkarte in ihrer ganzen Länge mit Signalen aus dem Rechen- und Steuerwerk beschrieben wird. Die Informations-Übertragung auf die Magnetspur erfolgt mit solcher Kodierung, daß die Information mehrfach hintereinander auf der Magnetspur erscheint und symmetrisch angeordnet ist, so daß die Schlüsselkarte in beiden Bewegungsrichtungen von einer entsprechenden Leseeinrichtung abgetastet werden kann. Weitere Ansteuerung der Transportvorrichtung für die Vorbewegung der Schlüsselkarte bewirkt beispielsweise die Übergabe in einen Fall-schacht zum Auswerfen in die Ausgabemulde 14.

Es kann zweckmäßig sein, eine Verriegelungsschaltung vorzusehen, die bewirkt, daß die Ansteuerung der Leuchtanzeige 7 zusammen mit dem Fachnummer-Leuchtschild 9 erst dann erfolgt, wenn der Benutzer die Schlüsselkarte aus der Ausgabemulde 14 oder aus einem gesondert vrogesehenen Ausgabeschlitz entnommen hat, bei dem es sich um den auch als Einleseschlitz 13 fungierenden Schlitz in der zentralen Bedienungseinheit (vgl. Fig. 1) handeln kann. Dadurch ist sichergestellt, daß der Benutzer sich erst dann zum ihm zugewissenen Schließfach 15 begeben kann, wenn er auch die Schlüsselkarte an sich genommen hat, die andernfalls von einer unbefugten Person aus der zentralen Bedienungseinheit entnommen werden könnte, nachdem der Benutzer sich in Richtung auf das Schließfach 15 mit der angezeigten Nummer fortbewegt hat.

Ehe die Ausgabe der Schlüsselkarte erfolgt, wird in die Magnetspur außer der zugewiesenen Fachnummer auch eine Schlüssel- oder Prüfdateninformation eingeschrieben. Die Zuordnung dieser Prüfdaten während des gerade beginnenden Benutzungszeitraumes zu einem Schließfach 15 der angezeigten Nummer wird in dem Rechen- und Steuerwerk abgespeichert.

Wenn später das Schließfach 15 mit dieser Schließfachnummer erneut, an einen anderen Benutzer, vergeben wird, erfolgt bei Anzeige der Fach-Zuteilung unter der Fachnummer die Abspeicherung einer neu gebildeten Prüfdaten-Information, d.h., die bisher dieser Fachnummer zugeordnet gewesenen Prüfdaten werden in der Speicherschaltung des Rechen- und Steuerwerkes gelöscht. Dadurch ist sichergestellt, daß später niemand mit der alten Schlüsselkarte dieses — oder irgendein anderes — Schließfach 15 öffnen kann, weil auf der alten Schlüsselkarte Prüfdaten enthalten sind, die aufgrund der Organisation des Prüfdatengenerators später nicht wieder vorkommen.

Auf die Magnetspur der Schlüsselkarte kann auch eine Information über den Zeitpunkt, nämlich das Datum und insbesondere die Uhrzeit, der Belegung des Schließfaches eingespeichert werden.

Bei Kombination dieser Zeit-Information mit der übrigen Prüfdaten-Information ergibt sich automatisch ein Prüfdatensatz, der sich nicht wiederholen kann. Im übrigen ist es zweckmäßig, für die Prüfdatengewinnung einen Zufallsgenerator heranzuziehen.

Bei Prüfdatenbildung, in die die Uhrzeit nicht eingeht, genügt es, die Uhrzeit über den Beginn der Schließfachbelegung in das Rechen- und Steuerwerk abzuspeichern, um bei Überziehen der Grundmietzeit die Gebührennachentrichtung in entsprechender Höhe anfordern zu können.

Es ist zweckmäßig, das dem Benutzer zugeteilte Schließfach 15 zumindest beim Freigeben für Inhalts-Entnahme, möglichst aber auch beim Freigeben zur Belegung, also zum Verschließen der Tür 16, mit einer variablen Verzögerung anzusteuern. Denn dadurch ist sichergestellt, daß das zugeteilte Schließfach 15, dessen Nummer auf der Leuchtanzeige 7 der zentralen Bedienungseinheit aufleuchtete, auch wirklich von der berechtigten Person nach Erreichen des Standortes dieses Schließfaches 15 betätigt wird, und nicht von irgendeiner anderen Person, die sich zufällig schon dort aufhielt und beispielsweise die Freigabe der Tür 16 bemerkte. Dem Benutzer ist es ggf. dann möglich, sein Gepäck in das Schließfach einzulegen und die Tür 16 durch Zudrücken zu verschließen. Eine Quittungsinformation vom Quittierschalter 21 dient der Rückmeldung an das Rechen- und Steuerwerk über die Tatsache, daß das zugeteilte Schließfach nun belegt ist. Von nun an beginnt die Ermittlung und Abspeicherung der Belegungszeit im RAM-Speicher 23.

Wurde von der Bedienungsperson an der zentralen Bedienungseinheit nicht zuerst die Fachgrößen-Wahltaste 4 betätigt, sondern zuerst Geld in den Münzeinwurf 1 eingegeben, dann blinkt das Wahl-Hinweisschild 3 beispeilsweise 20 sec. lang auf, das etwa die Inschrift "Fachgröße wählen" mit Pfeil-Hinweisen auf die Wahl-Tasten 4 trägt. Falls keine Betätigung einer Wahl-Taste 4 erfolgt, dann wird nach Ablauf dieser Zeitspanne der eingeworfene und noch in der Zwischenkasse gehaltene Geldbetrag in die Ausgabemulde 14 zurückgeworfen. Erfolgt aber die Betätigung einer der Wahl-Tasten 4 innerhalb dieser Zeitspanne, schließt sich der oben beschriebene Ablauf über Ausgabe einer Schlüsselkarte und Fachnummer-Anzeige an.

Stellt der Benutzer bei Erreichen des ihm zugewiesenen Schließfaches 15 fest, daß es beispielsweise für sein Gepäckstück zu klein ist oder daß es verschmutzt oder aus anderen Gründen nicht benutzbar ist, dann kann er innerhalb einer vorgegebenen Zeitspanne über die Taste 5 die Geldrückgabe bewirken und nach erneuter Anforderung sich ein neues Schließfach 15 zuweisen lassen. Für diese Geldrückgabe und Neuwahl kann der gleiche Vorgang vorgesehen sein, wie nach Ablauf der Belegungszeit zur Entnahme des eingelegten Gutes, nämlich Einschieben der Schlüsselkarte in den Einleseschlitz 13 und Betätigung der Öffnungstaste 11. Weil der Quittungsschalter 21 aufgrund nicht verschlossener Tür 16 kein Signal abgab, erfolgt jetzt das Zurückwerfen des Geldes in die Ausgabemulde 14 anstatt Weiterleitung aus der Zwischenkasse in den Endspeicher.

Stattdessen kann aber auch vorgesehen sein, innerhalb einer vorgegebenen Zeitspanne, nach Ansteuerung der Leuchtanzeige 7 über die zugewiesene Schließfach-Nummer, die Geldrückgabe-Taste 5 zu betätigen.

Im Falle der Verweigerung der Benutzung eines zugewiesenen Schließfaches 15, also bei Auslösung der Geldrückgabe aus der Zwischenkasse ohne Betätigung des Quittungsschalters 21, erfolgt eine Registrierung dieser Tatsache in einer Zähl- und Sperreinrichtung 48 (vgl. Fig. 4 und 5) am Rechen- und Steuerwerk. Nach mehrmaliger, beispielsweise dreimaliger solcher Verweigerung der Inbenutzungnahme eines einmal zugewiesenen Schließfaches 15 erfolgt vom Rechen- und Steuerwerk aus eine automatische Sperre des Schließfaches 15 mit dieser Fachnummer, so daß dieses zukünftig nicht mehr einem Interessenten zugewiesen wird, ehe nicht die Sperre vom Wartungspersonal nach Überprüfung der Gegebenheiten wieder rückgängig gemacht wurde. Es kann zweckmäßig sein, eine automatische Signalgabe an eine abgesetzte Aufsichtstation zu übermitteln, um dort gleich registrieren zu lassen, daß von den verfügbaren Schließfächern 15 ein bestimmtes verweigert wird.

Wird ein einmal zugeteiltes Schließfach 15 innerhalb einer vorgegebenen Zeitspanne trotz Entrichtung des eingeforderten Gebührenbetrages nicht belegt, also der Quittungsschalter 21 nicht betätigt, so wird dieses Schließfach 15 im unbelegten Zustand wieder verriegelt, beispielsweise mit geöffneter Tür 16 nach Fig. 2. Dadurch soll Trickbetrug verhindert werden. Aus diesem Grunde wird bis zur erfolgten Wiederverriegelung kein neben diesem Fach liegendes Fach zugeteilt, sondern auf andere freie Fächer bei der Zuweisung zurückgegriffen.

Zum Zwecke der Schließfach-Öffnung für Entnahme hinterlegten Gutes wird die Schlüsselkarte, beispielsweise mit der Magnetspur nach unten, in beliebiger Längsrichtung in den Einleseschlitz 13 eingeschoben und vom Leser 33 des Magnetkartencontrollers eingezogen, um die magnetisch eingespeicherte Information abzutasten und die Schlüsselkarte dann wieder herauszufahren.

Erfolgt dieses Einführen der Schlüsselkarte in den Einleseschlitz 13 innerhalb der Grundmietzeit, für die der Gebührenbetrag schon entrichtet wurde, was sich aus einem Vergleich der Momentanzeit mit der Zeit bei Belegung des zugewiesenen Schließfaches 15 gemäß Speicherinhalt im Rechen- und Steuerwerk mittels des Mikrocomputers 22 in als solcher bekannter Weise ermitteln läßt, dann erfolgt eine Ansteuerung der Leuchtanzeige 7 mit einer Nummer, die gemäß Ansteuerung des Leuchtschildes 9 die Fachnummer darstellt. Durch Betätigung der Öffnungstaste 11 wird die Schließfachverschluß - Öffnungsfreigabeeinrichtung an der Tür 16 angesteuert. Dabei handelt es sich zweckmäßigerweise zunächst nur um eine vorübergehende Vorentriegelung, d. h., die Öffnung der Tür 16 erfolgt durch den Benutzer. Sollte dieser sich nicht oder nicht schnell genug von der zentralen Bedienungseinheit zum Schließfach 15 mit der angezeigten Nummer begeben haben, dann wird diese Tür 16 automatisch wieder verriegelt, um unbefugte Öffnung durch Dritte zu verhindern. Bei einer Einzieh-Tür 16 gemäß Abb. 2 mit rückwärtiger Verriegelung zieht sich die Tür 16 ggf. nach hinten selbsttätig ein und verriegelt sich, um das Gepäck ungestört entnehmen zu können.

Sollte der Benutzer auf dem Wege von der zentralen Bedienungseinheit zum zu entleerenden Schließfach 15 die Fachnummer wieder vergessen haben, so kann er an die zentrale Bedienungseinheit zurückkehren und erneut die Schlüsselkarte in den Einleseschlitz 13 einführen, um erneut die Nummern-Angabe auf der Leuchtanzeige 7 hervorzurufen. Denn solange dieses Schließfach 15 mit dieser Fachnummer noch nicht neu belegt wurde, ist im Rechen- und Steuerwerk noch die Prüfdaten-Information abgespeichert, die sich auch auf der Magnetspur der Schlüsselkarte befindet, und der Leseteil des Magnetkartencontrollers spricht deshalb weiterhin auf Eingabe dieser Schlüsselkarte mit Anzeige der Schließfachnummer an.

Wenn das Schließfach 15 geöffnet wurde und danach erneut einem Benutzer zugewiesen werden soll, wird mittels des Mikrocomputers 22 ein abgewandelter Prüfdaten-Satz erzeugt und über das Rechen- und Steuerwerk (Fig. 3) und den Schreibteil des Magnetkartencontrollers auf die Magnetspur der nun auszugebenden Schlüsselkarte sowie gleichzeitig in den RAM-Speicher 23 des Rechen- und Steuerwerkes übertragen. Von nun an ist die früher zu dieser Fachnummer ausgegebene Schlüsselkarte nicht mehr verwendbar, weder zur Ansteuerung der Schließfachverschluß-Öffnungsfreigabeeinrichtung noch auch nur zur Ansteuerung der Schließfachnummern-Anzeige auf der Leuchtanzeig 7; denn im Rechen- und Steuerwerk ist keine Prüfdaten Information mehr enthalten, die mit der in die alte Schlüsselkarte eingeschriebenen Prüfdaten-Information übereinstimmt.

Soll dennoch festgestellt werden, welche Fachnummer-Information bzw. gegebenenfalls welche weitere Information auf der Magnetspur einer solchen nicht mehr gültigen Schlüsselkarte enthalten ist, dann kann über einen Personalschalter 35 der Leser 33 des Magnetkartencontrollers samt Fachnummer-Anzeigeeinrichtung 7, 9 gesondert eingeschaltet werden, also unter Umgehung der prüfdatengesteuerten Sicherheitsschaltung.

Für den Fall einer Überzahlung bei erstmaliger oder nachträglicher Gebührenentrichtung kann eine Restgeldrückgabe vorgesehen sein.

Erfolgt das Einlesen der Schlüsselkarte zwecks Entnahme des im Schließfach 15 abgelegten Gutes erst nach Ablauf einer Zeitspanne, die als Höchstbelegungszeit vorgegeben ist, dann wird die besondere Anzeige 6 angesteuert, die zum Ausdruck bringt, daß die Höchstbelegungszeit überschritten wirde und der Benutzer sich bei der Aufsicht oder bei einer anderen Stelle, z.B. zur Entgegennahme seines dort inzwischen verwahrten Gutes, zu melden habe.

Für diesen Fall, aber auch bei Auftreten von Verständnisschwierigkeiten hinsichtlich Bedienung der zentralen Bedienungseinheit kann über Betätigung der Sprechtaste 12 eine Sprechverbindung zu einer abgesetzten Empfangsstelle hergestellt werden, um dem Benutzer Anweisungen für sein Verhalten übermitteln zu können.

Im Blockschaltbild nach Fig. 4 ist für die Hinweise an den Benutzer ein Bildschirm 41 vorgesehen, der über eine beliebige geeignete Zeichengeneratorschaltung 42 bekannter Art (vgl. z.B. ELEKTRONIK 1976, 4/71—75) zur Informationsdarstellung ansteuerbar ist.

Bei der Darstellung einer Schließfachanlage mit zentraler Bedienungseinheit gemäß Fig. 5 ist vorgesehen, anstelle der verschiedenen getrennten Informationsanzeigen, die in Fig. 1 gezeigt sind, einen solchen Bildschirm 41 vorzusehen. Die Schriftdarstellung auf dem Bildschirm 41 gibt dem Benutzer an, welchen Handgriff er jeweils zu tun hat, um den beschriebenen Bedienungsablauf in korrekter Folge zu gewährleisten. Auch die Gebührenschuld- und die Fachnummer-Anzeige vorbeschriebener Art wird nun also durch entsprechende Informationsdarstellung auf dem Bildschirm 41 ersetzt.

In Fig. 4 ist ferner der schon erwähnte Personalschalter 35 berücksichtigt, der vorzugsweise nur bei auf der zentralen Bedienungseinheit aufgesetzter Aufsetzschablone 43 wirksam ist. Dadurch ist sichergestellt, daß die in Fig. 5 dargestellten Bedienungsorgane nun andere Funktionen haben, nämlich solche Funktionen, die für eine Funktionsüberprüfung des Rechen- und Steuerwerkes durch Wartungspersonal erforderlich sind. Für solche Überprüfungsvorgänge sind somit keine gesonderten Schalter innerhalb oder außerhalb der zentralen Bedienungseinheit, über den Unbefugten nicht zugänglichen Funktionenumschalter in Form des Personalschalters 35 hinaus, erforderlich.

Dieser Personalschalter 35 ist insbesondere dafür eingerichtet, von der zentralen Bedienungseinheit aus den Belegzustand der einzelnen Schließfächer 15 der Schließfachanlage abfragen zu können, wobei das momentan abgefragte Schließfach 15 mit seiner Schließfachnummer auf der Leuchtanzeige 7 (Fig. 1) oder auf dem Bildschirm 41 (Fig. 5) erscheint.

Auch kann über den Personalschalter 35 eine der vorhandenen Tasten in der zentralen Bedienungseinheit dafür umfunktioniert werden, ein uber seine Nummer vorgebbares Fach zu sperren, weil beispielsweise an diesem Fach Unregelmäßigkeiten aufgetreten sind, die erst behoben werden sollen.

Im Interesse hohen Bedienungskomforts für Wartungs- und Kontrollpersonal ist es zweckmäßig, über eine weitere Stellung des Personalschalters 35 eine Kassen-Sollabfrage des Münzvorrates im Geldspeicher durchzuführen und das Resultat auf der Leichtanzeige 7 bzw. auf dem Bildschirm 41 anzuzeigen, die auch die Ansteuerung der Geldrückzahleinrichtung für Wechselgeldausgabe bzw. Mietgeldrückgabe bei Fach-Nichtbelegung mit umfassen kann.

Anschlußmöglichkeiten 44 für einen Drucker an diese Kassenbestands-Abfrage ermöglichen den Ausdruck des Sollbestandes und damit eine vereinfachte Abrechnung. Bei Vorhandensein eines Selbsttestprogrammes für das Rechen- und Steuerwerk kann über diesen Drucker auch eine Ausgabe der ermittelten Fehler erfolgen, aufgrund derer die erforderlichen Wartungsarbeiten bestimmt werden.

Schließlich ist es für den praktischen Einsatz einer Schließfachanlage der erfindungsgemäßen Art zweckmäßig, im Rechen- und Steuerwerk eine Schaltung für Ermittlung statistischer Informationen über die Beleghäufigkeit und durchschnittliche Belegungszeit der einzelnen Schließfächer vorzusehen und die Resultate ebenfalls über den Personalschalter 35 abzufragen bzw. über einen Drucker auszugeben, weil diese Informationen für die Gestaltung von Aufstellverträgen zu Schließfachanlagen der erfindungsgemäßen Art und aus solchen Verträgen herrührende Verpflichtungen von wirtschaftlicher Bedeutung sein können.

Im Rahmen der vorliegenden Erfindung sind unter Schließfächern 15 aber nicht nur herkömmliche Handgepäck-Schließfächer von Schließfachanlagen, wie sie auf Bahnhöfen oder Flughäfen installiert sind, zu verstehen, sondern darüber hinaus insbesondere auch schrankartige Schließfächer, wie sie zur Aufnahme von Garderobe in öffentlichen Bädern, Sportanlagen, Theatergarderoben oder Fabrikanlagen zum vorübergehenden Unterbringen von Kleidungsstücken aufgestellt sind. Darüber hinaus ist die Erfindung vorteilhaft bei allen Arten von Warenautomaten anwendbar, bei denen das Warenangebot in einzelnen Fächern deponiert ist, deren Türen nach Maßgabe einer Anwahl unter Berücksichtigung der Entrichtung eines vorgegebenen Geldbetrages zur Warenentnahme geöffnet werden können. Wenn die Erfindung im Dienstleistungsbereich, wie etwa in Parkhäusern Einsatz finden soll, dann entspricht die beschriebene, auf Anforderung erfolgende Schließfach-Zuordnung der Zuordnung eines bestimmten Abstellplatzes und die beschriebene Handhabung der Schließfachtür zur Betätigung des Beleg-Quittungsschalters 21 einer Aktivierung eines Sensors, der an der jeweiligen Parkbucht installiert ist, um die Belegung der Parkbucht an die zentrale Bedienungseinheit zu signalisieren. Der beschriebenen Öffnungs-Freigabe einer Schließfachtür zur Schließfachbelegung kann bei diesem Einsatzfall der Erfindung eine, bevorzugt optische, Signalgabe entsprechen, die die Zuteilung einer Parkbucht zum Inhalt hat; dem berechtigten Fahrzeugführer wird dadurch das Auffinden der ihm zugewiesenen Parkbucht erleichtert, und falls ein Fahrzeug in einer Parkbucht abgestellt sein sollte, bei der diese Signalgabe nicht vorliegt, dann ist das für das Aufsichtspersonal oder für eine Sensor-Kontrollschaltung ein Kriterium dafür, daß in dieser Parkbucht ein Fahrzeug unbefugt, nämlich ohne vorherige Zuweisung auf Anforderung an der zentralen Bedienungseinheit, abgestellt wurde.

**Patentansprüche**

1. Schließfachanlage mit Zentraler Bedienungseinheit mit einer Schaltanordnung zu vorübergehend wirksamer Ansteuerung einer Öffnungs-Freigabeeinrichtung, einer Wahl-Taste (4), einem Zahlungsvergleicher, einem Schlüsselspender und -aufnehmer mit Aufnahme-Detektor, einer Belegzeit-Ermittlungsschaltung und einem Speicher (23) mit ausgegebenen Schlüsseln zugeordneten Speicherplätzen, dadurch gekennzeichnet, daß der Speicher (23) Bestandteil eines Rechen- und Steuerwerkes mit einem Mikrocomputer (22) ist, an das neben der Wahl-Taste (4) und einem Zahlungsvergleicher eine Gebührenschuld-Anzeigeeinrichtung (7, 8), ein Prüfdatengeber, eine Fachnummer-Anzeigeeinrichtung (7, 9), der Schlüsselspender in Form eines mit einem Magnetspur-Schreibgerät für Fachnummer- und variable Prüfdaten ausgestatteten Schlüsselkartenspenders und die Öffnungs-Freigabeeinrichtung in Form von je einer individuell ansteuerbaren Fachtür-Entriegelungseinrichtung (19) pro Schließfach (15) angeschlossen sind, und daß an das Rechen- und Steuerwerk ferner der Schlüsselaufnahme-Detektor in Form eines Schlüsselkarten-Lesers (33) mit Prüfdaten-Koinzidenzschaltung angeschlossen ist, dem die Belegzeit-Ermittlungsschaltung, die Gebührenschuld-Anzeigeeinrichtung (7, 8), der Zahlungsvergleicher, die Fachnummer-Anzeigeeinrichtung (7, 9) und die vorübergehend wirksame Schließfachverschluß - Öffnungsfreigabeeinrichtung zum Wieder-Öffnen eines Faches (15) nachgeschaltet sind.

2. Schließfachanlage nach Patentanspruch 1, dadurch gekennzeichnet, daß zur Ansteuerung der Schließfachverschluß-Öffnungsfreigabeeinrichtung eine Öffnungstaste (11) mit einer Schaltanordnung für variable Zeitverzögerung der Öffnungsfreigabe vorgesehen ist.

3. Schließfachanlage nach Patentanspruch 1 oder 2, dadurch gekennzeichnet, daß die Gebuhrenschuld-Anzeigeeinrichtung (7, 8) mit einem Blinkgeber (46) zusammengeschaltet und die Fachnummer-Anzeigeeinrichtung (7, 9) sowie die Öffnungstaste (11) während dessen Ansteuerung blockiert sind.

4. Schließfachanlage nach einem der vorangegangenen Patentansprüche, dadurch gekennzeichnet, daß sie eine Sprechverbindung (10) zu einer abgesetzten Empfangsstelle (47) aufweist.

5. Schließfachanlage nach einem der vorangegangenen Patentansprüche, dadurch gekennzeichnet, daß eine Geldrückgabe-Taste (5) mit einer Zähleinrichtung (48) für Nichtbelegung eines entriegelten Schließfaches (15) zusammengeschaltet ist deren Zählergebnis-Ausgang eine Schließfach-Sperreinrichtung nachgeschaltet ist.

6. Schließfachanlage nach einem der vorangegangenen Patentansprüche, dadurch gekennzeichnet, daß ein Personalschalter (35) und eine diesem zugeordnete Aufsetzschablone (43) vorgesehen sind.

7. Schließfachanlage nach Patentanspruch 6, dadurch gekennzeichnet, daß der Personalschalter (35) mit einem Schlüsselkarten-Leser (33) zusammengeschaltet ist, dem eine Leuchtanzeige (7) nachgeschaltet ist.

8. Schließfachanlage nach einem der vorangegangenen Patentansprüche, dadurch gekennzeichnet, daß ein Interkommunikations-Bildschirm (41) in der zentralen Bedienungseinheit vorgesehen ist, der aus dem Rechen- und Steuerwerk (Mikrocomputer 22) über eine Schriftgeneratorschaltung (42) nach Maßgabe von Hinweis- und Leuchtschildinformationsdarstellung ansteuerbar ist.

9. Schließfachanlage nach Anspruch 6, dadurch gekennzeichnet, daß sie mit einer Abfrage- und Anzeigesteuerschaltung hinsichtlich ihres momentanen Belegzustandes ausgestattet ist.

**Revendications**

1. Installation à casiers fermés à unité de commande centrale avec un agencement de manoeuvre pour la commande à action temporaire d'un dispositif de libération d'ouverture, une touche de sélection (4), un comparateur de comptage, un distributeur et récepteur de clé à détecteur de réception, un circuit de détermination de durée d'occupation et une mémoire (23) à positions de mémoire associées à des clés délivrées, caractérisée en ce que la mémoire (23) est partie constitutive d'un bloc de calcul et de commande avec un microcalculateur (22), auquel, outre la touche de sélection (4) et un comparateur de comptage, sont raccordés un dispositif (7, 8) d'affichage de taxe due, un générateur de données de contrôle, un dispositif (7, 9) d'affichage de numéro de casier, le distributeur de clés sous la forme d'un distributeur de cartes-clés équipé d'un appareil d'écriture à piste magnétique pour des données de numéro de casier et des données variables de contrôle, et le dispositif de libération d'ouverture sous la

forme, pour chaque casier (15), d'un dispositif respectif (19) de déverrouillage de porte de casier pouvant être commandé individuellement, et en ce qu'au bloc de calcul et de commande est en outre raccordé le détecteur de réception de clé sous la forme d'un lecteur (33) de cartes-clés avec un circuit à coïncidence pour données de contrôle derrière lequel sont branchés le circuit de détermination de durée d'occupation, le dispositif (7, 8) d'affichage de la taxe due, le comparateur de comptage, le dispositif (7, 9) d'affichage de numéro de casier et le dispositif 'de fermeture et de libération d'ouverture de casier, temporairement actif, pour la réouverture d'un casier (15).

2. Installation à casiers fermés selon la revendication 1, caractérisée en ce que pour la commande du dispositif de fermeture et de libération d'ouverture de casier, il est prévu une touche d'ouverture (11) avec un agencement de circuit pour un retardement variable de la libération d'ouverture.

3. Installation à casiers fermés selon la revendication 1 ou 2, caractérisée en ce que le dispositif (7, 8) d'affichage de taxe due est interconnecté à un clignotant (46) et le dispositif (7, 9) d'affichage de numéro de casier ainsi que la touche d'ouverture (11) sont bloqués pendant l'excitation de celui-ci.

4. Installation à casiers fermés selon l'une des revendications précédentes, caractérisée en ce qu'elle comporte une liaison téléphonique (10) avec un poste récepteur (47) situé à distance.

5. Installation à casiers fermés selon l'une des revendications précédentes, caractérisée en ce qu'une touche (5) de restitution d'argent est interconnectee à un dispositif de comptage (48) pour l'inoccupation d'un casier (15) déverrouillé, derrière la sortie de résultat de comptage duquel est branché un dispositif de blocage de casiers.

6. Installation à casiers fermés selon l'une des revendications précédentes, caractérisée en ce qu'il est prévu un commutateur de service (35) et un gabarit enfichable (43) associé à celui-ci.

7. Installation à casiers fermés selon la revendication 6, caractérisée en ce que le commutateur de service (35) est interconnecté à un lecteur (33) de carte-clé, derrière lequel est branché un voyant lumineux (7).

8. Installation à casiers fermés selon l'une des revendications précédentes, caractérisée en ce qu'il est prévu dans l'unité de commande centrale un écran (41) d'intercommunication, qui peut être commandé à partir du bloc de calcul et de commande (microcalculateur 22) par l'intermédiaire d'un circuit générateur de signaux graphiques (42) en fonction d'une représentation d'informations du panneau indicateur et du panneau lumineux.

9. Installation à casiers fermés selon la revendication 6, caractérisée en ce qu'elle est équipée d'un circuit d'interrogation et d'affichage concernant son état instantané d'occupation.

## Claims

1. Deposit box or locker arrangement having a central operating unit with an assembly circuit for the temporarily effective control of an opening release device, a selector key (4), a payment comparator, a key or code dispenser and receiver having a reception detector, a voucher time determining circuit and a store (23) having storage locations associated with issued codes, characterised in that the store (23) forms part of an arithmetic unit and control unit having a microcomputer (22) to which are connected, in addition to the selector key (4) and a payment comparator, a due charge indicator (7, 8), a test or check data transmitter, a box number indicator (7, 9), the code dispenser in the form of a code card dispenser equipped with a magnetic track logger for recording box number data and variable test data and the opening release device in the form of an individually controllable box or locker door unlocking device (19) for each box or locker (15), and that the key or code reception detector in the form of a code card reader (33) having a test data coincidence circuit is also connected to the arithmetic unit and control unit, the said detector or reader being followed in the system by the voucher time determining circuit, the 'due charge' indicator (7, 8), the payment comparator, the box number indicator (7, 9) and the temporarily effective box closure/opening release device for re-opening a deposit box (15).

2. Deposit box or locker arrangement according to Claim 1, characterised in that, to control the box closure/opening release device, an opening key (11) is provided with a control arrangement for the variable time delay of the opening release.

3. Deposit box or locker arrangement according to Claim 1 or 2, characterised in that the 'due charge' indicator (7, 8) is interconnected with a flasher (46) and the box number indicator (7, 9) and the opening key (11) are inhibited during the control thereof.

4. Deposit box or locker arrangement according to any one of the preceding Claims, characterised in that it has a voice communication (10) with a remote receiving terminal (47).

, 5. Deposit box or locker arrangement according to any one of the preceding Claims, characterised in that a money return key (5) is interconnected with a counter (48) to indicate availability of an unlocked box or locker (15), the count output of the said counter being followed in the system by a box locking device.

6. Deposit box or locker arrangement according to any one of the preceding Claims, characterised in that there are provided a personnel switch (35) and a control word (43) which is associated therewith and fitted on the central operating unit.

7. Deposit box or locker arrangement according to Claim 6, characterised in that the personnel switch (35) is interconnected with a code card reader (33) which is followed in the system by a luminous display (7).

8. Deposit box or locker arrangement according to any one of the preceding Claims, characterised in that there is provided in the central operating unit an intercommunication display (41) which can be controlled from the arithmetic and control unit (microcomputer 22) via a character generator circuit (42) in accordance with information sign and light sign data representation.

9. Deposit box or locker arrangement according to Claim 6, characterised in that it is equipped with an inquiry and indication control circuit to indicate instantaneously its state of availability.

FIG.1 — 0 006 403

FIG. 2

# FIG.3

Fig. 4

0 006 403

Fig. 5

0 006 403